# EUROPEAN PATENT SPECIFICATION

(11) **EP 3 855 427 B1**
(45) Date of publication and mention of the grant of the patent: **22.04.2026**
(21) Application number: 18934405.4
(22) Date of filing: 18.09.2018
(51) Int. Cl.: G10H 1/00, G06F 16/68

(54) **MUSIC PIECE ANALYSIS DATA DISTRIBUTION SYSTEM**
MUSIKSTÜCKANALYSEDATENVERTEILUNGSSYSTEM
SYSTÈME DE DISTRIBUTION DE DONNÉES D'ANALYSE DE MORCEAU DE MUSIQUE

(43) Date of publication of application: 28.07.2021
(73) Proprietor: AlphaTheta Corporation, Nishi-ku, Yokohama-shi Kanagawa 220-0012 (JP)
(72) Inventor: OHE, Kanta, Yokohama-shi, Kanagawa 220-0012 (JP)
(74) Representative: Gille Hrabal Partnerschaftsgesellschaft mbB Patentanwälte
(86) International application number: PCT/JP2018/034402
(87) International publication number: WO 2020/059008

(56) References cited:
- JP-A- 2017 208 098
- JP-A- 2017 208 098
- US-A1- 2014 270 181
- US-B1- 8 634 947
- CASEY M A ET AL: "Content-Based Music Information Retrieval: Current Directions and Future Challenges", PROCEEDINGS OF THE IEEE, IEEE. NEW YORK, US, vol. 96, no. 4, 1 April 2008 (2008-04-01), pages 668 - 696, XP011206028, ISSN: 0018-9219

## Description

### TECHNICAL FIELD

The present invention relates to a music piece data comparison device, a music piece analysis data distribution server, a music piece data comparison program, and a music piece analysis data distribution program.

### BACKGROUND ART

Before DJ performance, in which a performer operates a playback controller (e.g. a DJ controller) and a computer the performer does a preliminary (preparation) work.

The preliminary work includes analysis of music piece data (i.e. detection of BPM and KEY, detection and regulating of beat positions, setting of CUE points, and the like). The analysis of the music piece data, which was typically done by the performer using a music piece data analysis program, was a heavy burden on the performer.

In order to alleviate the burden on the performer, it is conceivable to store in a server through the Internet or the like a music piece analysis data obtained through the analysis of the music piece data by various performers in advance, so that the performers can download the music piece analysis data of necessary music piece(s) for use. In this case, it is necessary to compare whether the downloaded music piece analysis data correctly matches the music piece analysis data of the music piece data requested by the performer.

Therefore, JP H10-134549 A discloses a technique where the music piece data is converted into a power spectrum and multiple pieces of index information are extracted from the power spectrum data, the index information being transmitted to
be compared with contents stored in a server.

JP 2014-519660 A discloses a technique where a fingerprint value, which is generated from the music piece data with the use of fingerprinting technology, is transmitted to be compared with contents stored in a server.

JP 2012-34043 A discloses a technique where metadata (e.g. title, artist name, and the like) annexed to the music piece data is obtained and transmitted to be compared with contents stored in a server.

JP 2017 208098 A discloses a system and method for searching for music in online stores or the like by means of metadata including the BPM of the music .

US 2014/270181 discloses systems and methods to selectively mix a first and second song together during a live performance by means of metadata including the BPM of the music .

### SUMMARY OF THE INVENTION

### PROBLEMS TO BE SOLVED BY THE INVENTION

However, the technique disclosed in JP H10-134549 A, which requires the power spectrum analysis of the music piece data in order to extract the index information, has a problem that it takes long time before generating the index information and thus the burden on the performers is not reduced.

The technique disclosed in JP 2014-519660 A, which requires complicated calculation for generating the fingerprint value, has a problem that it takes long time before the fingerprint value is generated. Moreover, when a part of the music piece data is of different music piece or when the music piece data is a combination of a plurality of music piece data, the music piece analysis data is not correctly compared based on the fingerprint generated only from a part of the music piece data.

The metadata used in the technique disclosed in JP 2012-34043 A, which is editable by the performers, possibly results in incorrect comparison. Moreover, since the music piece data is sometimes on different albums or the music piece analysis data is sometimes recorded for only a part of the music piece data, the music piece analysis data is not always usable even if the metadata matches.

An object of the invention is to provide a music piece analysis data distribution system correct and rapid downloading of a music piece analysis data of desired music piece data stored in a server to reduce the burden for the preliminary work of performers.

### MEANS FOR SOLVING THE PROBLEMS

A music piece analysis data distribution system as defined in appended claim 1 is provided in accordance with the present invention.

### BRIEF DESCRIPTION OF DRAWINGS

Fig. 1 is a block diagram showing a music piece data comparison device and a music piece analysis data distribution server according to an exemplary embodiment of the invention.
Fig. 2 is a flowchart showing a function of the exemplary embodiment.

### DESCRIPTION OF EMBODIMENT(S)

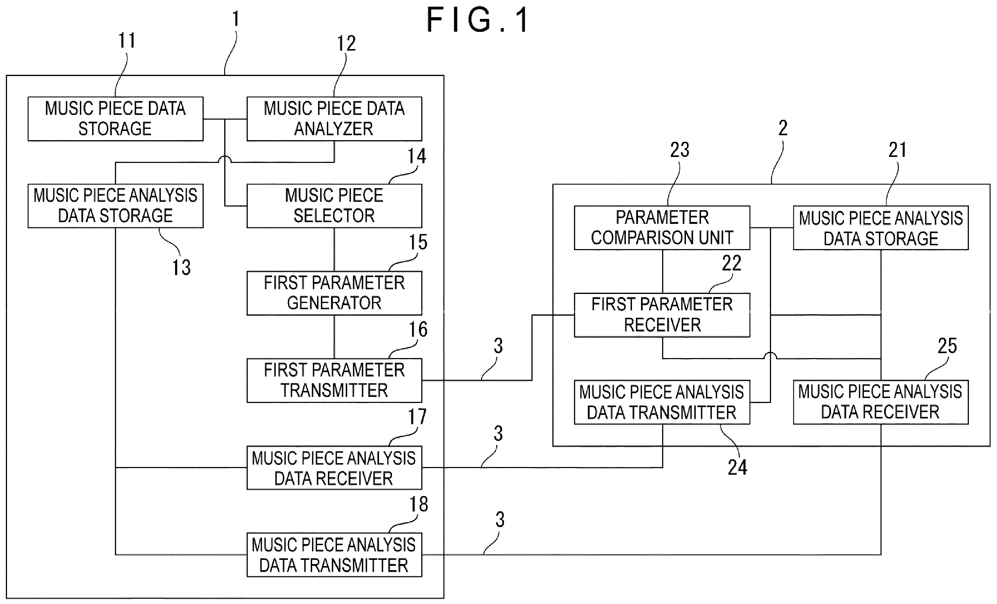

An exemplary embodiment of the invention will be described below with reference to the attached drawings. Fig. 1 shows a music piece analysis data distribution system according to the present exemplary embodiment. The music piece analysis data distribution system includes a computer 1, a server 2 (a music piece analysis data distribution server), and a network 3 connecting the computer 1 and the server 2 in a manner capable of bidirectional communication therebetween.

The computer 1 (a music piece data comparison device) is a general-purpose computer including a processing unit and a storage (e.g. a hard disk).

The computer 1 is provided with a music piece data storage 11, a music piece data analyzer 12, a music piece analysis data storage 13, a music piece selector 14, a first parameter generator 15, a first parameter transmitter 16, a music piece analysis data receiver 17, and a music piece analysis data transmitter 18, which are embodied in a form of a computer-readable music piece data comparison program configured to be run on the processing unit and secured in a predetermined storage area in the storage.

The music piece data storage 11, which is defined by a part of the storage area in the storage, is configured to store a plurality of music piece data of a predetermined file format. Examples of the file format processible with the computer 1 of the present exemplary embodiment include a video (container format) file with an extension of mpg, mp4, m4v, mov, avi, and qtz, and a video (video codec) file with an extension of h.264, mpeg-4, and mpeg-2. The file format processible with the computer 1 also include an audio (audio codec) file, examples of which include an uncompressed audio file with an extension of wav and aiff, a lossless compressed audio file with an extension of flac and alac, and a lossy compressed audio file with an extension of aac and mp3.

The music piece data analyzer 12 is configured to select any music piece data stored in the music piece data storage 11 and analyze the music piece data through FFT (Fast Fourier Transform) or the like, thereby detecting BPM (Beat Per Minute) and KEY, beat positions, and characteristic sections (e.g. verse, pre-chorus, chorus, and the like) of the music piece data. The detected music piece analysis data is stored in the music piece analysis data storage 13.

The music piece selector 14 is configured to display the plurality of music piece data stored in the music piece data storage 11 to request a user to select the music piece data.

The first parameter generator 15 is configured to generate a first parameter from the entirety of the music piece data selected by the music piece selector 14. Specifically, the first parameter generator 15 sums 32-bit binary data from the start to the end of the music piece data to generate checksum data, which is lower 32-bit binary data after the entirety of the music piece data are summed, as the first parameter. It should be noted that the metadata of the music piece data is not summed.

The first parameter generator 15 is further configured to acquire a duration time of the music piece data based on a sampling frequency, bit rate, and data length of the music piece data to generate the first parameter.

Although the checksum data is generated as the first parameter in the present exemplary embodiment, in an example departing from the present invention, the first parameter can be generated through the other processes as long as the first parameter is generated from the entirety of the music piece data within a short time. For instance, the first parameter can be a hash value generated using a hash function.

The first parameter transmitter 16 is configured to transmit the first parameter, which includes the checksum data and the duration time of the music piece data generated by the first parameter generator 15, to the server 2 via the network 3. It should be noted that the network 3 can be wired or wireless networks as long as the first parameter can be uploaded

The music piece analysis data receiver 17 is configured to receive the music piece analysis data transmitted from the server 2. The received music piece analysis data is stored in the music piece analysis data storage 13.

The music piece analysis data transmitter 18 is configured to transmit the music piece analysis data, which the performer has analyzed using the music piece data analyzer 12, to the server 2 via the network 3. At this time, the first parameter generator 15 simultaneously generates the first parameter corresponding to the analyzed music piece analysis data, which is transmitted by the first parameter transmitter 16.

The server 2 is implemented as a computer including a processing unit and a storage. It should be noted that the server 2, which is illustrated to be connected only to a single computer 1 via the network 3 in Fig. 1, is actually connected to a plurality of computers 1 in a manner capable of communication as in the Internet.

The server 2 includes a music piece analysis data storage 21, a first parameter receiver 22, a parameter comparison unit 23, a music piece analysis data transmitter 24, and a music piece analysis data receiver 25, which are embodied in a form of a computer-readable music piece analysis data distribution program configured to be run on the processing unit and secured in a predetermined storage area in the storage.

The music piece analysis data storage 21, which is embodied as a part of the storage area in the storage of the computer, stores any music piece analysis data in association with a second parameter.

The first parameter receiver 22 is configured to receive the first parameter transmitted from the computer 1 via the network 3.

The parameter comparison unit 23 is configured to compare the first parameter, which is received by the first parameter receiver 22, with the second parameter stored in the music piece analysis data storage 21. The parameter comparison unit 23 finds the second parameter matching the first parameter and then outputs the matched second parameter to the music piece analysis data transmitter 24.

The music piece analysis data transmitter 24 is configured to call up the music piece analysis data corresponding to the matched second parameter outputted by the parameter comparison unit 23 from the music piece analysis data storage 21 to transmit the music piece analysis data to the computer 1.

The music piece analysis data receiver 25 is configured to receive the music piece analysis data transmitted from the computer 1 and store the music piece analysis data in the music piece analysis data storage 21. At this time, the music piece analysis data receiver 25 associates the music piece analysis data with the first parameter transmitted from the computer 1 and store the first parameter and the music piece analysis data in the music piece analysis data storage 21 as the second parameter and music piece analysis data.

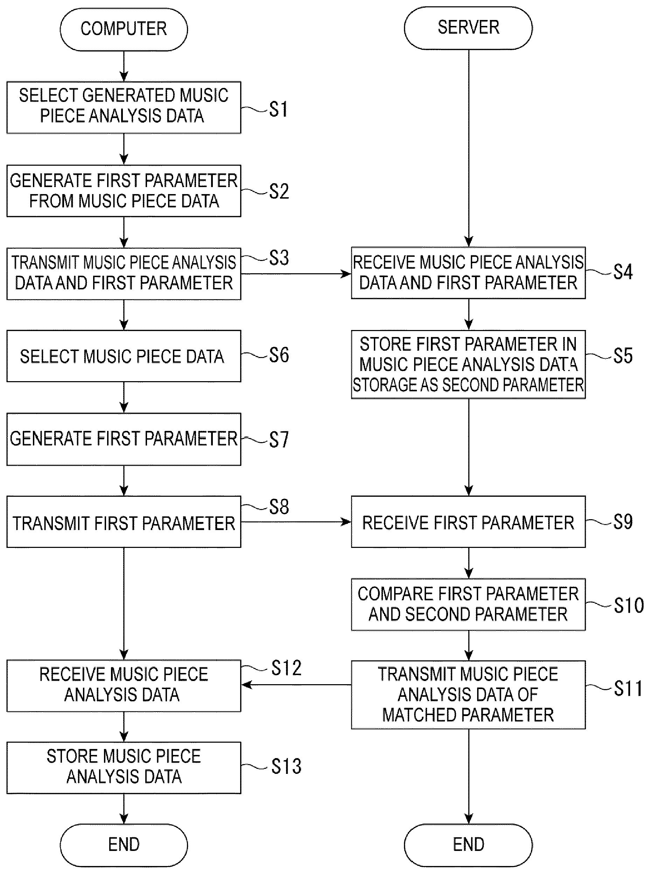

Next, a function of the present exemplary embodiment will be described below with reference to a flowchart shown in Fig. 2.

### Accumulation of Music Piece Analysis Data

A plurality of performers select the music piece analysis data generated by the music piece data analyzer 12 (Step S1).

The first parameter generator 15 generates the first parameter from the music piece data corresponding to the selected music piece analysis data (Step S2).

The music piece analysis data transmitter 18 transmits the selected music piece analysis data to the server 2 via the network 3. Simultaneously, the first parameter transmitter 16 transmits the first parameter generated by the first parameter generator 15 to the server 2 via the network 3 (Step S3).

The music piece analysis data receiver 25 of the server 2 receives the music piece analysis data transmitted from the computer 1. Simultaneously, the first parameter receiver 22 receives the first parameter transmitted from the computer 1 (Step S4).

The music piece analysis data receiver 25 receives the music piece analysis data and stores the received music piece analysis data associated with the second parameter in the music piece analysis data storage 21 (Step S5), where the first parameter received by the first parameter receiver 22 is regarded as the second parameter.

The above Steps S1 to S5 are performed by the plurality of computers 1 connected via the network 3, so that a large number of music piece analysis data is stored in the music piece analysis data storage 21 of the server 2.

### Acquisition of Music Piece Analysis Data through Data Comparison

Performers such as DJ, who require the music piece analysis data of the music piece data to be played, select the music piece data using the music piece selector 14 (Step S6).

The first parameter generator 15 generates the first parameter based on the selected music piece data (Step S7).

The first parameter transmitter 16 transmits the generated first parameter to the server 2 (Step S8).

Upon receipt of the first parameter (Step S9), the first parameter receiver 22 of the server 2 outputs the received first parameter to the parameter comparison unit 23.

The parameter comparison unit 23 compares the received first parameter with the second parameter stored in the music piece analysis data storage 21 (Step S10).

The music piece analysis data transmitter 24 calls up the music piece analysis data associated with the second parameter, which is found matched as a result of the comparison by the parameter comparison unit 23, and transmits the music piece analysis data to the computer 1 (Step S11).

The music piece analysis data receiver 17 of the computer 1 receives the music piece analysis data (Step S12).

The music piece analysis data receiver 17 stores the received music piece analysis data in the music piece analysis data storage 13 (Step S13).

According to the present exemplary embodiment, the following advantages can be achieved.

In the present exemplary embodiment, the first parameter generator 15 generates the first parameter from the entirety of the music piece data. Comparing the first parameter generated from the entirety of the music piece data with the second parameter similarly generated from the entirety of the music piece data allows highly accurate acquisition of the requested music piece analysis data. Accordingly, the music piece analysis data can be acquired within a shorter time and with less burden than acquiring the music piece analysis data through the music piece analysis by the performers themselves.

The first parameter, which is in a form of the checksum data, allows reduction of the processing time, so that the music piece analysis data can be acquired within a further shorter time.

In the exemplary embodiment, the duration time of the music piece data is also used as the first parameter. Performing comparison using the checksum data and the duration time allows further accurate comparison and thereby reliable acquisition of the requested music piece analysis data.

It should be noted that the scope of the invention is not limited by the above-described exemplary embodiment but includes below-described modifications. For instance, the received music piece analysis data can be temporarily stored in a temporary memory as the music piece analysis data storage 13 and discarded after playing the music piece data. In this case, the music piece analysis data is separately downloaded from the server each time when being required.

The invention is not limited to the above-described exemplary embodiment, where the music piece analysis data is only downloaded from the server 2 to the computer 1. For instance, beat positions and the like of the downloaded music piece analysis data can be modified in advance and the modified music piece analysis data can be uploaded to the server 2.

The invention is not limited to the above-described exemplary embodiment, where the music piece data comparison device is a general-purpose computer 1. For instance, the music piece data comparison device is a handheld terminal or a playback controller (e.g. DJ controller), which is capable of bidirectional communication with the server 2, in some embodiments of the invention.

In addition, the structure, process or the like in implementing the invention may be modified in any manner as long as such a modification falls within the scope of the appended claims.

### Explanation of Codes

1...computer, 2...server, 3...network, 11...music piece data storage, 12...music piece data analyzer, 13...music piece analysis data storage, 14...music piece selector, 15...first parameter generator, 16...first parameter transmitter, 17...music piece analysis data receiver, 18...music piece analysis data transmitter, 21...music piece analysis data storage, 22...first parameter receiver, 23...parameter comparison unit, 24...music piece analysis data transmitter, 25...music piece analysis data receiver

## Claims

1. A music piece analysis data distribution system comprising:
a computer (1); and
a server (2) connected to the computer (1) in a manner capable of communication,
the computer (1) comprising
a music piece data storage (11) configured to store music piece data,
a music piece analysis data storage (13) configured to store music piece analysis data including BPM - Beat Per Minute -, KEY, beat positions, and characteristic sections of the music piece data detected by analyzing the music piece data stored in the music piece data storage through FFT - Fast Fourier Transform -,
a music piece analysis data transmitter (18) configured to transmit, to the server (2), the music piece analysis data and a first parameter generated from the music piece data from which the music piece analysis data is generated, the first parameter being a checksum data generated from an entirety of the music piece data excluding metadata,
a music piece selector (14) configured to allow a user to select the music piece data stored in the music piece data storage (11),
a first parameter generator (15) configured to generate the first parameter from the music piece data selected through the music piece selector (14),
a first parameter transmitter (16) configured to transmit the first parameter generated by the first parameter generator (15) to the server (2), and
a music piece analysis data receiver (17) configured to receive, from the server (2), the music piece analysis data generated for the music piece data selected through the music piece selector (14), and
the server (2) comprising
a server-side music piece analysis data storage (21) configured to store the music piece analysis data transmitted from the computer (1), and also store the first parameter transmitted from the computer (1) in association with the music piece analysis data as a second parameter,
a first parameter receiver (22) configured to receive the first parameter from the computer (1),
a parameter comparison unit (23) configured to compare the first parameter received by the first parameter receiver (22) with the second parameter stored in the server-side music piece analysis data storage (21), and
a server-side music piece analysis data transmitter (24) configured to transmit, to the computer (1), the music piece analysis data corresponding to the second parameter that is compared to match the first parameter by the parameter comparison unit (23).

2. The music piece analysis data distribution system according to claim 1, wherein
the first parameter and the second parameter each include a duration time of the corresponding music piece data.

## Patentansprüche

1. Ein Musikstück-Analysedaten-Verteilsystem, umfassend:
einen Computer (1); und
einen Server (2), der mit dem Computer (1) in kommunikationsfähiger Weise verbunden ist,
der Computer (1) umfassend:
einen Musikstückdatenspeicher (11), der dazu eingerichtet ist, Musikstückdaten zu speichern,
einen Musikstück-Analysedatenspeicher (13), der dazu eingerichtet ist, Musikstück-Analysedaten zu speichern, die BPM - Beat Per Minute -, KEY, Beat-Positionen und charakteristische Abschnitte der Musikstückdaten enthalten, die durch Analysieren der in dem Musikstückdatenspeicher gespeicherten Musikstückdaten mittels FFT - Fast Fourier Transform - detektiert werden,
einen Musikstück-Analysedatensender (18), der dazu eingerichtet ist, die Musikstück-Analysedaten und einen ersten Parameter, der aus den Musikstückdaten erzeugt wird, aus denen die Musikstück-Analysedaten erzeugt werden, an den Server (2) zu senden, wobei der erste Parameter ein Prüfsummendatenwert ist, der aus einer Gesamtheit der Musikstückdaten mit Ausnahme von Metadaten erzeugt wird,
einen Musikstückselektor (14), der dazu eingerichtet ist, einem Benutzer zu ermöglichen, die in dem Musikstückdatenspeicher (11) gespeicherten Musikstückdaten auszuwählen,
einen ersten Parametergenerator (15), der dazu eingerichtet ist, den ersten Parameter aus den durch den Musikstückselektor (14) ausgewählten Musikstückdaten zu erzeugen,
einen ersten Parametersender (16), der dazu eingerichtet ist, den von dem ersten Parameter-Generator (15) erzeugten ersten Parameter an den Server (2) zu senden, und
einen Musikstück-Analysedatenempfänger (17), der dazu eingerichtet ist, von dem Server (2) die Musikstück-Analysedaten zu empfangen, die für die durch den Musikstückselektor (14) ausgewählten Musikstückdaten erzeugt wurden, und
der Server (2) umfassend:
einen serverseitigen Musikstück-Analysedatenspeicher (21), der dazu eingerichtet ist, die von dem Computer (1) gesendeten Musikstück-Analysedaten zu speichern, und auch den von dem Computer (1) gesendeten ersten Parameter in Verbindung mit den Musikstück-Analysedaten als einen zweiten Parameter zu speichern,
einen ersten Parameterempfänger (22), der dazu eingerichtet ist, den ersten Parameter von dem Computer (1) zu empfangen,
eine Parametervergleichseinheit (23), die dazu eingerichtet ist, den von dem ersten Parameterempfänger (22) empfangenen ersten Parameter mit dem in dem serverseitigen Musikstück-Analysedatenspeicher (21) gespeicherten zweiten Parameter zu vergleichen, und
einen serverseitigen Musikstück-Analysedatensender (24), der dazu eingerichtet ist, an den Computer (1) die Musikstück-Analysedaten zu senden, die dem zweiten Parameter entsprechen, der durch die Parametervergleichseinheit (23) mit dem ersten Parameter verglichen wird.

2. Das Musikstück-Analysedaten-Verteilsystem gemäß Anspruch 1, wobei
der erste Parameter und der zweite Parameter jeweils eine Zeitdauer der entsprechenden Musikstückdaten enthalten.

## Revendications

1. Un système de distribution de données d'analyse de morceau de musique comprenant :
un ordinateur (1) ; et
un serveur (2), connecté à l'ordinateur (1) d'une manière capable de communication,
l'ordinateur (1) comprenant
un stockage de données de morceau de musique (11), configuré pour stocker des données de morceau de musique,
un stockage de données d'analyse de morceau de musique (13), configuré pour stocker des données d'analyse de morceau de musique, incluant BPM - battements par minute -, KEY, positions des battements, et sections caractéristiques des données de morceau de musique détectés en analysant les données de morceau de musique stockées dans le stockage par FFT - Transformée de Fourier rapide -,
un émetteur de données d'analyse de morceau de musique (18), configuré pour transmettre, au serveur (2), les données d'analyse de morceau de musique et un premier paramètre généré à partir des données de morceau de musique à partir desquelles les données d'analyse de morceau de musique sont générées, le premier paramètre étant une donnée de somme de contrôle générée à partir d'une intégralité des données de morceau de musique, à l'exclusion des métadonnées,
un sélecteur de morceau de musique (14) configuré pour permettre à un utilisateur de sélectionner les données de morceau de musique stockées dans le stockage de données de morceau de musique (11),
un générateur de premier paramètre (15) configuré pour générer le premier paramètre à partir des données de morceau de musique sélectionnées via le sélecteur de morceau (14),
un émetteur de premier paramètre (16) configuré pour transmettre le premier paramètre généré par le générateur de premier paramètre (15) au serveur (2), et
un récepteur de données d'analyse de morceau de musique (17) configuré pour recevoir, du serveur (2), les données d'analyse de morceau de musique générées pour les données de morceau de musique sélectionnées via le sélecteur de morceau de musique (14), et
le serveur (2) comprenant
un stockage de données d'analyse de morceau de musique côté serveur (21), configuré pour stocker les données d'analyse de morceau de musique transmises de l'ordinateur (1), et aussi stocker le premier paramètre transmis de l'ordinateur (1) en association avec les données d'analyse de morceau de musique comme un deuxième paramètre,
un récepteur de premier paramètre (22), configuré pour recevoir le premier paramètre de l'ordinateur (1),
une unité de comparaison de paramètre (23), configurée pour comparer le premier paramètre reçu par le premier récepteur de paramètre (22) avec le deuxième paramètre stocké dans le stockage de données d'analyse de morceau de musique côté serveur (21), et
un émetteur de données d'analyse de morceau de musique côté serveur (24), configuré pour transmettre, à l'ordinateur (1), les données d'analyse de morceau de musique correspondant au deuxième paramètre, qui est comparé pour correspondre au premier paramètre par l'unité de comparaison de paramètre (23).

2. Le système de distribution de données d'analyse de morceau de musique selon la revendication 1, dans lequel
le premier paramètre et le deuxième paramètre incluent chacun une durée des données de morceau de musique correspondantes.
